# FASCICULE DE BREVET EUROPEEN

(11) **EP 2 449 632 B1**
(45) Date de publication et mention de la délivrance du brevet: **09.09.2015**
(21) Numéro de dépôt: 10734187.7
(22) Date de dépôt: 01.07.2010
(51) Int. Cl.: H01R 13/523, H01R 43/26, G02B 6/38, G02B 6/42

(54) **DISPOSITIF DE CONNEXION POUR CONNECTEUR IMMERGEABLE**
VERBINDUNGSANORDNUNG FÜR UNTERWASSER STECKVERBINDER
CONNECTION DEVICE FOR A SUBMERSIBLE CONNECTOR

(30) Priorité: 03.07.2009 FR 0903312
(43) Date de publication de la demande: 09.05.2012
(73) Titulaire: Centre National de la Recherche Scientifique (CNRS), 75016 Paris (FR); Université d'Aix-Marseille, 13284 Marseille Cedex 07 (FR)
(72) Inventeur: BEURTHEY, Stéphan, F-13830 Roquefort La Bedoule (FR); BILLAULT, Michel, F-13470 Carnoux En Provence (FR)
(74) Mandataire: Reboussin, Yohann Mickaël Noël
(86) Numéro de dépôt international: PCT/FR2010/000483
(87) Numéro de publication internationale: WO 2011/001047

(56) Documents cités:
- WO-A1-98/21785
- FR-A1- 2 563 662
- GB-A- 2 203 602
- GB-A- 2 342 461
- US-A- 3 821 690
- US-A- 4 391 330

## Description

La présente invention se rapporte au domaine des dispositifs de connexion ou de déconnexion d'un connecteur immergeable.

Ces connecteurs sont par exemple utilisés pour la connexion d'équipements scientifiques ou pétroliers à un réseau sous-marin de transmission d'énergie ou de données. Ces connecteurs peuvent plus généralement être utilisés dans tous types d'applications dans lesquelles ils sont destinés à être immergés, par exemple dans des applications nucléaires.

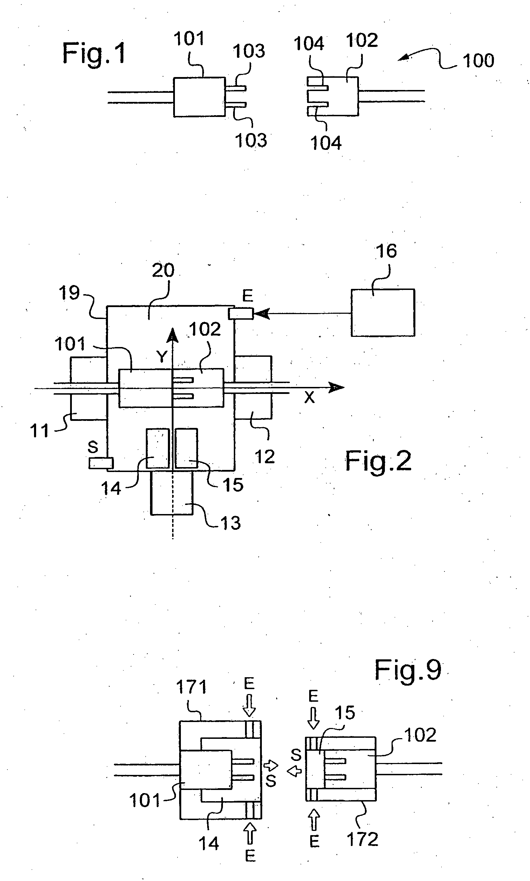

Ce type de connecteur 100 comprend généralement deux parties de formes complémentaires, à savoir une partie mâle 101 et une partie femelle 102, comme représenté schématiquement sur la figure 1.

Ce connecteur peut être un connecteur électrique, optique ou opto-électrique, en fonction des applications envisagées.

Dans tous les cas, il est primordial que celui-ci soit étanche à l'eau qui l'environne dans toutes les phases de son exploitation.

En particulier, ce connecteur doit être étanche lorsqu'il est en position de connexion ou en position de déconnexion, mais également pendant les étapes de connexion ou de déconnexion de ses parties mâle 101 et femelle 102.

La position de déconnexion est représentée sur la figure 1. Dans cette position, les partes mâle 101 et femelle 102 du connecteur sont éloignées l'une de l'autre.

En l'absence de protection des parties mâle et femelle du connecteur, on comprend ainsi que l'eau peut être mise en contact avec les fiches 103, 104 par lesquelles un signal électrique ou optique est destiné à être véhiculé lorsque le connecteur est en position de connexion.

Or, ces fiches 103, 104 électriques ou optiques ne peuvent pas être mises au contact de l'eau ou de particules en suspension dans l'eau si l'on souhaite que le connecteur fonctionne normalement lorsqu'il est en position de connexion.

En effet, un connecteur électrique ne peut fonctionner que dans un milieu diélectrique et propre. Un connecteur optique ne peut fonctionner que dans un milieu optiquement transparent dans une gamme de longueurs d'onde prédéterminée. Un connecteur opto-électrique ne peut fonctionner que dans un milieu à la fois diélectrique et optiquement transparent dans une gamme de longueurs d'onde prédéterminée.

Des dispositifs de connexion/déconnexion de connecteurs immergeables ont donc été proposés pour pallier ces difficultés. Ces connecteurs sont généralement des connecteurs sous-marins.

Un premier type de connecteur sous-marin connu, en l'occurrence électrique, est par exemple divulgué dans le document WO 91/13474.

Il met en oeuvre une chambre flexible remplie de fluide sous pression. La chambre est en communication fluidique avec un orifice d'accès, présentant la forme d'une conduite cylindrique flexible débouchant à l'extérieur du connecteur. Lorsque le connecteur sous-marin est installé, cela signifie que l'orifice débouche dans l'eau de mer.

La partie femelle du connecteur est disposée au niveau de l'extrémité de la chambre communiquant avec l'orifice, et présente la forme d'un contacteur périphérique.

La partie mâle du connecteur est formée d'une tige cylindrique susceptible de se déplacer dans l'orifice. Le diamètre de la tige cylindrique est légèrement supérieur à celui de l'orifice d'accès. En fonction de la position de la tige, son extrémité peut alors être en contact avec le contacteur périphérique ou pas.

Pour assurer le déplacement de la tige et par suite, assurer les opérations de connexion ou de déconnexion du connecteur, le connecteur comprend également une tige intermédiaire, réalisée en un matériau non conducteur de l'électricité, présentant un diamètre légèrement supérieur à celui de l'orifice d'accès, et montée sur ressort.

Une première extrémité du ressort est fixée au niveau de l'extrémité de la chambre qui est opposée à l'extrémité communiquant avec l'orifice. L'autre extrémité du ressort est en contact avec une première extrémité de la tige intermédiaire. L'autre extrémité de la tige intermédiaire est en contact avec l'extrémité de la tige formant la partie mâle du connecteur qui est susceptible de venir en contact avec le contacteur périphérique.

Le ressort, la tige intermédiaire et la tige formant partie mâle du connecteur sont donc intégrés au connecteur et par ailleurs montés en série dans la chambre flexible du connecteur.

En position de déconnexion, le ressort, alors dans sa position naturelle, s'étend sur la majeure partie de la chambre. Le ressort maintient alors la tige intermédiaire dans une position dans laquelle elle est, d'une part, en contact avec le contacteur périphérique et, d'autre part, en partie logée dans l'orifice. Par suite, la tige formant partie mâle du connecteur est elle-même maintenue à l'intérieur de l'orifice.

Pour effectuer la connexion du connecteur, une force est alors exercée sur la tige formant partie mâle du connecteur. Cette force repousse la tige intermédiaire qui comprime alors le ressort.

La connexion du connecteur est finalement obtenue lorsque la tige formant partie mâle du connecteur et le contacteur périphérique sont en contact.

L'étanchéité de la chambre est assurée par la déformabilité de la paroi de l'orifice, comprenant, quelle que soit la position du connecteur, une surface de contact relativement importante avec l'une ou l'autre des tiges dont le diamètre est légèrement supérieur à celui de l'orifice.

L'orifice d'accès de la chambre est donc toujours obturé quelle que soit la position du connecteur, pour éviter l'introduction d'eau de mer dans la chambre.

Cependant, on constate une perte d'étanchéité de ce type de dispositif au fil des connexions/déconnexions, de l'eau de mer arrivant à passer dans la chambre par des espaces qui se forment entre la paroi de l'orifice et les tiges.

Pour remédier à ce problème de perte d'étanchéité, on a proposé un autre type de connecteur, par exemple électrique, divulgué dans le document WO 99/31540. Ce type de connecteur est connu sous le nom de « rolling seal » selon la terminologie anglo-saxonne.

Dans ce type de connecteur, les parties mâle et femelle sont chacune disposée dans une chambre remplie d'un fluide diélectrique, par exemple de l'huile, fermée par un clapet.

En position de déconnexion, les chambres sont séparées et étanches grâce au clapet. L'eau de mer ne peut donc accéder au volume intérieur des chambres.

Lorsque l'on souhaite connecter les parties mâle et femelle du connecteur, on met alors en contact les deux chambres. La mise en contact des deux chambres provoque l'ouverture des clapets par l'intermédiaire d'un système d'actionnement intégré au connecteur lui-même.

Le système d'actionnement réalise l'ouverture des clapets de sorte que l'eau de mer ne peut entrer dans aucune des deux chambres. Les clapets peuvent être assimilées, dans leur fonction, aux tiges obturant l'orifice d'accès à la chambre du document WO 91/13474.

Une fois les clapets ouverts, les deux chambres initiales ne forment alors plus qu'une seule chambre étanche.

Les parties mâle et femelle du connecteur peuvent alors être connectées. A cet effet, le connecteur intègre un autre système d'actionnement, lequel est dédié au déplacement des parties mâle et femelle du connecteur au sein de la chambre.

Pour déconnecter les parties mâle et femelle du connecteur, on utilise alors à nouveau le même système d'actionnement.

Les parties mâle et femelle du connecteur sont toujours plongées dans le fluide diélectrique, évitant ainsi que de l'eau de mer puisse venir en contact avec les parties mâle et femelle du connecteur.

Ce type de connecteur présente cependant des inconvénients.

En effet, les connecteurs de type « rolling seal » sont assez complexes, dans la mesure où ils intègrent divers systèmes mécaniques pour actionner, d'une part, l'ouverture/fermeture des clapets et, d'autre part, gérer le déplacement des parties mâle et/ou femelle du connecteur.

De plus, les efforts nécessaires pour mettre en oeuvre les différents systèmes mécaniques du connecteur sont importants. Or, le système permettant le déplacement des parties mâle et femelle est en général actionné par un robot sous-marin, distinct du connecteur et commandé à distance. Ceci implique que le robot sous-marin puisse transmettre une puissance relativement importante pour effectuer la connexion/déconnexion de ce type de connecteur.

Plus généralement, l'intégration des différents systèmes d'actionnement au sein des connecteurs mêmes empêche toute maintenance tant que le connecteur est dans l'eau. Aussi, les connecteurs existants doivent être capables de rester plusieurs années en fonctionnement, dans des conditions environnementales difficiles (pression élevée par exemple).

Il n'est donc pas rare que des connecteurs tombent en panne prématurément, leur réparation exigeant alors de les remonter à la surface.

On peut également citer le document WO 98/21785 qui divulgue un dispositif de connexion/déconnexion d'un connecteur immergeable selon le préambule de la revendication 1.

Un objectif de l'invention est ainsi de proposer un dispositif de connexion/déconnexion d'un connecteur immergeables assurant l'étanchéité à l'eau environnant le connecteur, et dont la conception et la maintenance sont simplifiées.

Pour atteindre cet objectif, l'invention propose un dispositif de connexion/déconnexion d'un connecteur immergeable muni d'une partie mâle et d'une partie femelle, le dispositif étant externe au connecteur et comprenant des moyens pour déplacer au moins une desdites parties mâle ou femelle du connecteur, entre une position de connexion et une position de déconnexion et inversement, caractérisé en ce qu'il est désolidarisable du connecteur et en ce qu'il comprend, en outre, un système pour injecter un fluide autour des parties mâle et femelle du connecteur lorsque ce dernier passe de sa position de connexion à sa position de déconnexion et inversement, de façon à les isoler de l'eau environnant le connecteur.

Le dispositif pourra prévoir d'autres caractéristiques techniques de l'invention, prises seules ou en combinaison:
- au moins une chambre comprenant au moins une ouverture pour recevoir le fluide isolant lesdites parties mâle et femelle de l'eau environnant le connecteur, lorsque ce dernier passe de sa position de connexion à sa position de déconnexion et inversement et au moins une ouverture pour évacuer ce fluide à l'extérieur de la chambre ;
- une chambre dans laquelle les parties mâle et femelle du connecteur sont logées ;
- deux chambres dont l'une comprend la partie mâle du connecteur et dont l'autre comprend la partie femelle du connecteur, les deux chambres formant des parties mâle et femelle complémentaires susceptibles de s'imbriquer l'une dans l'autre, chaque chambre comprenant au moins une ouverture pour recevoir le fluide lorsque le connecteur passe de sa position de connexion à sa position de déconnexion et inversement et au moins une ouverture pour évacuer ce fluide, laquelle est en communication fluidique avec l'eau environnant le connecteur ;
- des moyens d'obturation pour rendre lesdites parties mâle et femelle du connecteur étanches à l'eau environnant le connecteur, lorsque le connecteur est en position de déconnexion ;
- un moyen pour déplacer lesdits moyens d'obturation entre la position de connexion et la position de déconnexion et inversement ;
- le moyen pour déplacer les moyens d'obturation comprend un écarteur susceptible d'être mis en même temps au contact des moyens de déplacement des parties mâle et femelle du connecteur ;
- l'écarteur présente une forme symétrique, par exemple une forme triangulaire ;
- un premier moyen de rappel, monté entre un bâti du dispositif et le moyen de déplacement des moyens d'obturation, pour déplacer lesdits moyens d'obturation lorsque le connecteur passe de sa position de déconnexion à sa position de connexion ;
- le moyen pour déplacer la partie mâle du connecteur comprend une première crémaillère et un premier engrenage susceptible d'entraîner ledit moyen de déplacement de la partie mâle par l'intermédiaire de sa crémaillère et le moyen pour déplacer la partie femelle du connecteur comprend une deuxième crémaillère et un deuxième engrenage susceptible d'entraîner ledit moyen de déplacement de la partie femelle par l'intermédiaire de sa crémaillère ;
- les deux engrenages coopèrent entre eux, et sont de préférence identiques ;
- un deuxième moyen de rappel, monté entre le moyen pour déplacer la partie mâle du connecteur et le moyen pour déplacer la partie femelle du connecteur, pour connecter lesdites parties mâle et femelle entre elles.

Le dispositif pourra être utilisé pour connecter ou déconnecter les parties mâle et femelle d'un connecteur électrique immergeable, dans lequel le fluide pour isoler lesdites parties mâle et femelle du connecteur de l'eau l'environnant est un fluide diélectrique.

Le dispositif pourra également être utilisé pour connecter ou déconnecter les parties mâle et femelle d'un connecteur optique immergeable, dans lequel le fluide pour isoler lesdites parties mâle et femelle du connecteur de l'eau l'environnant est un fluide optiquement transparent dans une gamme de longueurs d'onde prédéterminée.

L'invention propose aussi un procédé de connexion/déconnexion d'un connecteur immergeable muni d'une partie mâle et d'une partie femelle, caractérisé en ce que, à partir du dispositif de connexion/déconnexion précité, on injecte un fluide autour des parties mâle et femelle du connecteur lorsque ce dernier passe de sa position de connexion à sa position de déconnexion et inversement, de façon à les isoler de l'eau environnant le connecteur.

Les étapes du procédé pourront également être caractérisées comme suit :
- l'étape consistant à passer le connecteur de sa position de connexion à sa position de déconnexion et inversement comporte une sous-étape consistant à déplacer des moyens d'obturation des parties mâle et femelle du connecteur selon une direction perpendiculaire à la direction de déplacement desdites parties mâle et femelle ;
- on injecte le fluide en surpression par rapport à l'eau environnant le connecteur.

D'autres caractéristiques, buts et avantages de l'invention seront énoncés dans la description détaillée ci-après faite en référence aux figures suivantes :
- la figure 2 est un schéma d'un dispositif de connexion ou de déconnexion du connecteur de la figure 1, conforme à l'invention et comportant des moyens pour confiner un fluide autour des parties mâle et femelle du connecteur ;
- la figure 3, qui comprend les figures 3(a) à 3(e), présente les différentes positions du dispositif de connexion/déconnexion de la figure 2, pour faire passer le connecteur de la figure 1 depuis sa position de déconnexion à sa position de connexion;
- la figure 4, qui comprend les figures 4(a) à 4(e), présente les différentes positions du dispositif de connexion/déconnexion de la figure 2, pour faire passer le connecteur de la figure 1 depuis sa position de connexion à sa position de déconnexion;
- la figure 5 est un schéma représentant un mode de réalisation de moyens pour déplacer les parties mâle et femelle du connecteur, compris dans le dispositif conforme à l'invention ;
- la figure 6 est un schéma représentant une variante de réalisation des moyens pour déplacer les parties mâle et femelle du connecteur;
- la figure 7 est un schéma représentant un mode de réalisation d'un moyen pour déplacer des moyens d'obturation des parties mâle et femelle du connecteur, compris dans le dispositif conforme à l'invention ;
- la figure 8 représente une vue en perspective d'un mode de réalisation conforme au schéma représenté sur la figure 2 ;
- la figure 9 est un schéma d'un dispositif de connexion/déconnexion conforme à l'invention, dans lequel les moyens employés pour confiner le fluide autour des parties mâle et femelle du connecteur diffèrent de ceux du mode de réalisation représenté sur la figuré 2.

La figure 2 schématise un connecteur 100 en position de connexion et un dispositif de connexion/déconnexion de ce connecteur 100.

Le dispositif 1 de connexion/déconnexion comprend un moyen 11 pour translater la partie mâle 101 du connecteur et un moyen 12 pour translater la partie femelle 102 du connecteur. La translation des parties mâle 101 et femelle 102 s'effectue dans une même direction, se confondant avec l'axe x représenté, et dans des sens opposés.

Il comprend également un moyen 13 pour déplacer des moyens d'obturation 14, 15 des parties mâle et femelle du connecteur. Ces moyens d'obturation 14, 15 sont représentés dans leur position de repos sur la figure 2. Ils viennent s'insérer entre les parties mâle 101 et femelle 102 du connecteur 100, dans la position de déconnexion du connecteur.

A cet effet, le moyen 13 peut par exemple, comme représenté sur la figure 2, être un moyen assurant une translation des moyens d'obturation 14, 15 selon une direction (l'axe y représenté) perpendiculaire à la direction de déplacement des parties mâle 101 et femelle 102 du connecteur.

A cet effet, les moyens d'obturation 14, 15 sont solidaires du moyen 13.

Cependant, pour réaliser la fixation des moyens d'obturation 14, 15 sur les parties mâle 101 et femelle 102 du connecteur, ceux-ci sont désolidarisés du moyen 13. Cette fixation peut par exemple s'effectuer par clipsage.

Les moyens d'obturation 14, 15 sont des bouchons présentant une forme susceptible de couvrir respectivement la partie mâle 101 et la partie femelle 102 du connecteur. Ces bouchons 14, 15 peuvent être réalisés en matériau polymère ou en matériau métallique. Les parties mâle 101 et femelle 102 du connecteur et leurs moyens d'obturation 14, 15 respectifs sont disposés dans une chambre 19.

Cette chambre 19 comporte deux ouvertures, à savoir une ouverture d'entrée E et une ouverture d'évacuation S pour un fluide 20.

Le dispositif comprend enfin un système d'injection 16 pour remplir cette chambre avec le fluide 20.

Le système d'injection 16 comporte un réservoir, et éventuellement une pompe.

Le réservoir peut par exemple être réalisé en un matériau déformable, en particulier pour des applications sous-marines. Dans ce cas, il peut ainsi supporter la pression de l'eau l'environnant sans se détériorer, la pression du fluide dans le réservoir étant par ailleurs la même que celle de l'eau l'environnant.

La pompe, lorsqu'elle est mise en oeuvre, permet d'injecter le fluide depuis le réservoir vers les parties mâle et femelle du connecteur, en surpression par rapport à l'eau environnant le connecteur.

De plus, lorsque le réservoir est déformable, la pompe peut alors être une pompe de faible puissance, capable d'apporter une légère surpression de l'ordre de quelques mbar par rapport à l'eau environnant le connecteur.

La surpression dépend notamment de la viscosité du fluide utilisé. Plus ce dernier est visqueux, plus la surpression peut être faible.

L'introduction du fluide 20 dans la chambre 19 lorsque le connecteur passe de sa position de connexion à sa position de déconnexion et inversement permet d'isoler les parties mâle 101 et femelle 102 du connecteur par rapport à l'eau environnant le connecteur. Le fluide 20 entrant dans la chambre 19 par l'ouverture d'entrée E en ressort par l'ouverture d'évacuation S.

L'ouverture d'évacuation S peut déboucher directement dans l'eau ou bien être en communication fluidique avec un système de récupération (non représenté) du fluide. Lorsqu'il est mis en oeuvre, ce système de récupération peut faire parvenir le fluide 20, après un éventuel traitement, vers le système d'injection 16 de fluide.

Ce fluide 20 est diélectrique pour un connecteur électrique, optiquement transparent dans une gamme de longueurs d'onde prédéterminée pour un connecteur optique et à la fois diélectrique et optiquement transparent dans une gamme de longueurs d'onde prédéterminée pour un connecteur opto-électrique.

La gamme de longueurs d'onde est prédéterminée en fonction des longueurs d'onde du signal optique destiné à être transporté par la fibre optique sur laquelle se situe le connecteur.

De nombreuses huiles, comme les huiles minérales ou silicones, sont susceptibles de convenir comme fluide 20 pour isoler les parties mâle 101 et femelle 102 du connecteur de l'eau l'environnant.

Le fluide 20 peut être injecté en surpression par rapport à la pression de l'eau environnante pour éviter que l'eau n'entre par la sortie S de la chambre 19. En variante, on peut prévoir, au niveau de la sortie S, un clapet anti-retour ou une bâche de vidange. Dans cette variante, le système d'injection 16 pourrait par exemple prévoir un réservoir déformable, sans prévoir de pompe, aucune surpression dans la chambre 19 n'étant alors nécessaire.

Le fait de pouvoir remplir la chambre 19 avec ce fluide permet de plonger les parties mâle 101 et femelle 102 du connecteur dans ce fluide lorsque cela est nécessaire, c'est-à-dire lors d'étapes de connexion ou de déconnexion du connecteur. Lors de ces étapes, la chambre 19 permet de confiner le fluide autour des parties mâle 101 et femelle 102 du connecteur, la surpression, le clapet anti-retour ou autres évitant à l'eau d'entrer dans la chambre 19.

On évite ainsi que de l'eau soit mise en contact avec les fiches 103, 104 du connecteur.

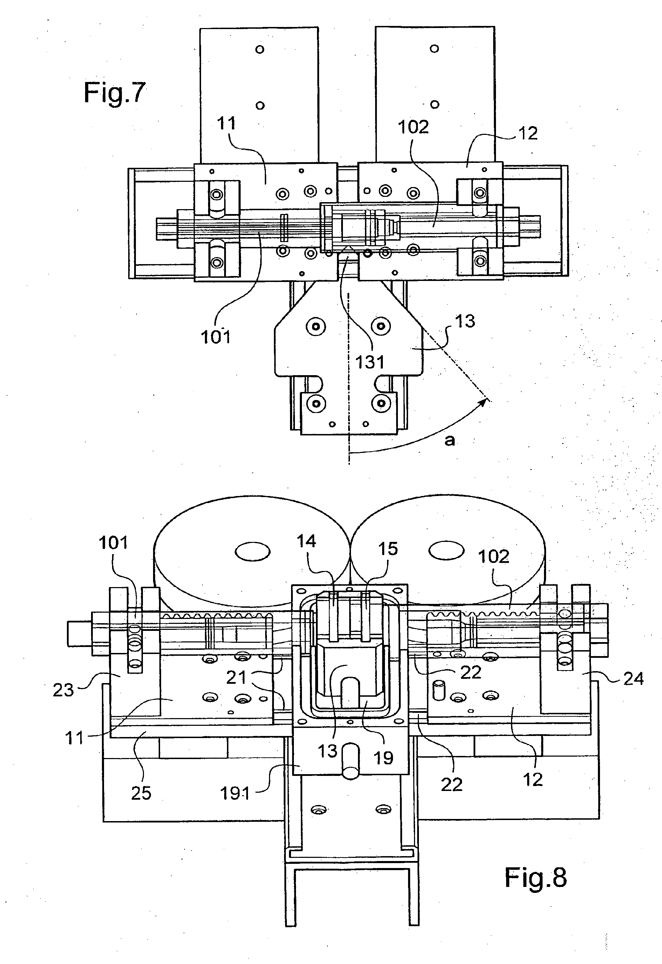

La figure 8 est une vue en perspective d'un mode de réalisation du dispositif schématisé sur la figure 2, lorsque le dispositif est en position de déconnexion.

Sur cette figure 8, les parties mâle 101 et femelle 102 du connecteur 100 sont respectivement montées sur des moyens 11, 12 pour la translation des parties mâle 101 et femelle 102 du connecteur 100, lesquelles comportent notamment des plaques montées sur des rails 21, 22. Les plaques sont susceptibles de se translater lé long de rails réalisés dans une autre plaque, quant à elle fixe, du dispositif. Les parties male 101 et femelle 102 du dispositif sont montées sur les plaques par l'intermédiaire de moyens de montage 23, 24 fixés respectivement sur la plaque 11 et sur la plaque 12. Les parties mâle 101 et femelle 102 du connecteur 100 peuvent être désolidarisées des moyens de montage 23, 24 lorsqu'on le souhaite.

La chambre 19 est constituée par deux demi-boîtiers superposés, dont un seul 191 est représenté sur la figure 8, ce qui permet de représenter la disposition des différents moyens du dispositif par rapport aux parties mâle 101 et femelle 102 du connecteur 100 au sein de la chambre 19.

Comme on peut le constater, les moyens constituant le dispositif de connexion/déconnexion (les moyens 13, les bouchons 14, 15, les moyens 11, 12 pour translater les parties mâle 101 et femelle 102 du connecteur, le système d'injection 16) sont externes au connecteur. Le connecteur employé est basique, toute la complexité du système étant reporté hors du connecteur. Ainsi, si une pièce du dispositif de connexion/déconnexion est défaillante, il est relativement aisé d'en effectuer la maintenance sous l'eau, voire même de la changer sous l'eau.

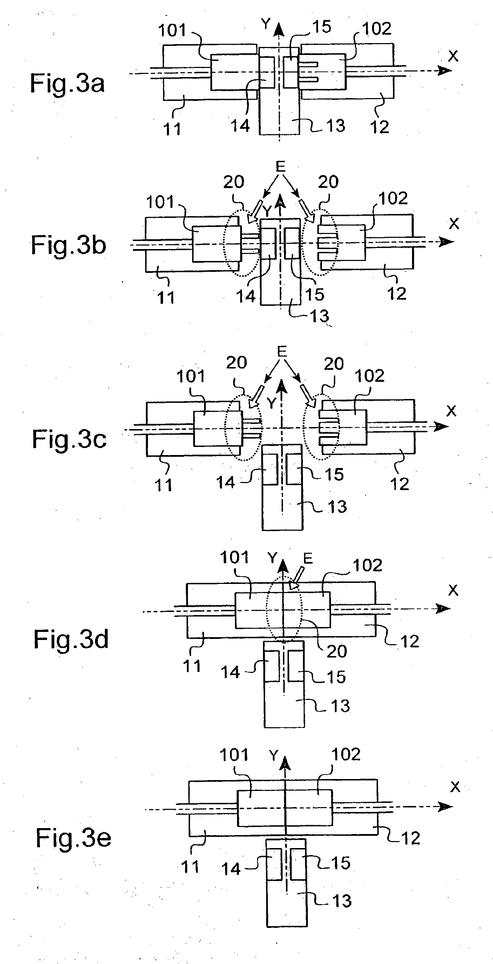

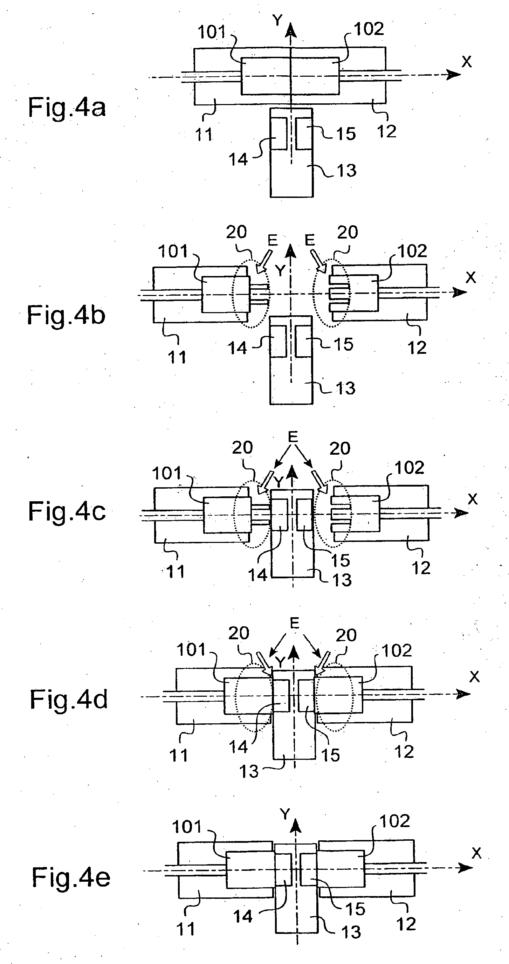

Nous allons maintenant détailler les étapes de connexion et de déconnexion du dispositif de la figure 2 ou 8, à l'appui des figures 3 et 4.

Par souci de simplification, la chambre 19 n'est pas représentée sur les figures 3 et 4.

Une fois qu'on a positionné le connecteur par rapport au dispositif de connexion, la connexion du connecteur 100 s'effectue comme suit.

Lorsque le connecteur 100 est en position de déconnexion, comme illustré sur la figure 3(a), on injecte un fluide dans la chambre 19, les parties mâle 101 et femelle 102 du connecteur 100 étant ainsi plongées dans le fluide.

Puis, on déplace les parties mâle 101 et femelle 102 du connecteur 100, en translatant les moyens 11, 12 selon la même direction et dans des sens opposés. Cette direction correspond à l'axe du connecteur et se confond avec l'axe x. A l'issue de cette étape, les parties mâle 101 et femelle 102 du connecteur sont donc séparées du moyen 13 destiné à déplacer les moyens d'obturation 14, 15 du connecteur, comme illustré sur la figure 3(b).

Le moyen 13 pour déplacer les moyens d'obturation 14, 15 est ensuite translaté, selon une direction perpendiculaire à la direction de déplacement des parties mâle 101 et femelle 102 du connecteur, afin que les moyens d'obturation 14, 15 soient extraient de la zone de déplacement des parties mâle 101 et femelle 102 du connecteur. Cette translation s'effectue donc selon l'axe y du système de coordonnées (x, y) orthogonal représenté sur la figure 3, dans un sens visant à éloigner les moyens d'obturation 14, 15 des parties mâle 101 et femelle 102 du connecteur. A l'issue de cette étape, le dispositif se trouve dans la position représentée sur la figure 3(c).

On déplace alors les parties mâle 101 et femelle 102 du connecteur, en translatant les moyens 11, 12 selon la même direction et dans des sens opposés, de façon à ce que les parties mâle 101 et femelle 102 viennent se connecter.

A l'issue de cette étape, le connecteur est en position de connexion, comme représenté sur la figure 3(d). La représentation de la figure 3(d) correspond à la situation représentée sur la figure 2, la chambre 19 étant encore remplie par le fluide 20 provenant du système d'injection 16.

Pendant toutes les étapes illustrées sur les figures 3(b), 3(c) et 3(d), du fluide 20 est injecté dans la chambre 19, de façon à ce que les parties mâle 101 et femelle 102, et plus particulièrement les fiches 103, 104 du connecteur ne soient pas mises en contact avec l'eau.

Aussi, la dernière étape consiste à arrêter l'injection de fluide dans la chambre 19, comme représenté sur la figure 3(e).

Après une période d'utilisation, et une fois qu'on a positionné le connecteur 100 par rapport au dispositif de connexion/déconnexion, le connecteur 100 peut alors être déconnecté comme suit.

La figure 4(a) correspond à la position de connexion du connecteur lorsqu'il fonctionne. Elle est en tout point conforme à la position du connecteur illustrée sur la figure 3(e).

Lorsque le connecteur 100 est en position de connexion, comme illustré sur la figure 4(a), on injecte un fluide 20 dans la chambre 19, les parties mâle 101 et femelle 102 du connecteur 100 étant ainsi plongées dans le fluide 20.

Puis, on déplace les parties mâle 101 et femelle 102 du connecteur 100, en translatant les moyens 11, 12 selon la même direction et dans des sens opposés, pour déconnecter les parties mâle 101 et femelle 102. Cette direction correspond à l'axe du connecteur et se confond avec l'axe x. A l'issue de cette étape, les parties mâle 101 et femelle 102 du connecteur sont donc séparées du moyen 13 destiné à déplacer les moyens d'obturation 14, 15 du connecteur, comme illustré sur la figure 4(b).

Le moyen 13 pour déplacer les moyens d'obturation 14, 15 est ensuite translaté, selon une direction perpendiculaire à la direction de déplacement des parties mâle 101 et femelle 102 du connecteur, afin que les moyens d'obturation 14, 15 soient disposés entre les parties mâle 101 et femelle 102 du connecteur. Cette translation s'effectue donc selon l'axe y du système de coordonnées (x, y) orthogonal représenté sur la figure 4, dans un sens visant à rapprocher les moyens d'obturation 14, 15 des parties mâle 101 et femelle 102 du connecteur. A l'issue de cette étape, le dispositif se trouve dans la position représentée sur la figure 4(c).

On déplace alors les parties mâle 101 et femelle 102 du connecteur, en translatant les moyens 11, 12 selon la même direction et dans des sens opposés, de façon à ce que les parties mâle 101 et femelle 102 viennent au contact des moyens d'obturation 14, 15.

A l'issue de cette étape, le connecteur est en position de déconnexion, comme représenté sur la figure 4(d).

Pendant toutes les étapes illustrées sur les figures 4(b), 4(c) et 4(d), l'injection de fluide dans la chambre est maintenue, de façon à ce que les parties mâle 101 et femelle 102 du connecteur ne soient pas mises en contact avec l'eau environnant le connecteur.

Aussi, la dernière étape consiste à arrêter l'injection de fluide, comme représenté sur la figure 4(e).

Après avoir effectué la connexion du connecteur, ou sa déconnexion, le dispositif de connexion/déconnexion peut être désolidarisé du connecteur. Cela évite de le laisser sur place, et permet donc de l'utiliser pour une autre opération de connexion/déconnexion, ou bien, selon les besoins, de l'extraire de l'eau pour en effectuer la maintenance.

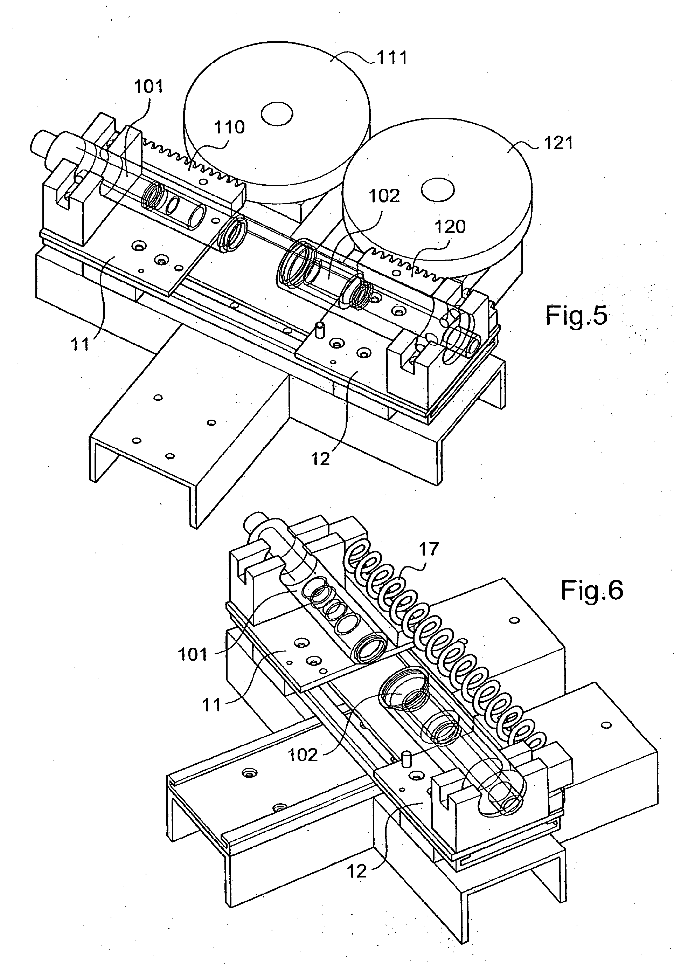

Nous allons maintenant détailler, à l'appui des figures 5 à 8, différentes réalisations possibles pour les moyens 11, 12 de déplacement des parties mâle 101 et femelle 102 du connecteur, le moyen 13 pour déplacer les moyens d'obturation 14, 15 et enfin, la chambre recevant le fluide provenant du système d'injection 16. Le système d'injection 16 n'est pas représenté sur ces figures 5 à 8.

La figure 5 représente un mode de réalisation des moyens 11, 12 de déplacement des parties mâle 101 et femelle 102 du connecteur 100.

Selon ce mode de réalisation, le moyen 11 pour déplacer la partie mâle 101 du connecteur 100 comprend une première crémaillère 110 et un premier engrenage 111 susceptible d'entraîner ledit moyen 11 de déplacement de la partie mâle par l'intermédiaire de sa crémaillère 110.

Par ailleurs, le moyen 12 pour déplacer la partie femelle 102 du connecteur comprend une deuxième crémaillère 120 et un deuxième engrenage 121 susceptible d'entraîner ledit moyen 12 de déplacement de la partie femelle par l'intermédiaire de sa crémaillère 120.

Pour assurer un mouvement de translation synchronisé et en sens opposé des parties mâle 101 et femelle 102, les deux engrenages 111, 121 sont engrenés entre eux.

De préférence, les deux engrenages 111, 121 sont identiques. Dans ce cas, ils présentent donc un même diamètre et un même nombre de dents ce qui permet d'assurer un déplacement identique, et à une même vitesse, des deux parties 101, 102 du connecteur 100.

Selon ce mode de réalisation, les moyens 11, 12 pour déplacer les parties mâle 101 et femelle 102 du connecteur 100 sont donc liés l'un à l'autre pour assurer un déplacement synchronisé des deux parties 101, 102 du connecteur.

Avec ce mode de réalisation, on peut donc prévoir un moyen d'actionnement (non représenté) n'agissant que sur l'un des deux engrenages 111, 121 pour assurer le déplacement des deux moyens 11, 12. Ce moyen d'actionnement est par exemple un robot immergeable, distinct du dispositif de connexion/déconnexion, commandé à distance.

En variante, on pourrait envisager que les deux engrenages ne sont pas liés entre eux, chaque engrenage étant ainsi actionné indépendamment.

De plus, les engrenages 111, 121 permettent de démultiplier les efforts qui leurs sont appliqués, ce qui permet d'employer un moyen d'actionnement peu puissant pour agir sur les engrenages.

Comme illustré sur la figure 6, un moyen de rappel 17 tel qu'un ressort peut par ailleurs être monté entre les deux moyens 11, 12 de déplacement des parties mâle 101 et femelle 102 du connecteur 100.

Le moyen de rappel 17 exerce une force de rappel qui rapproche les parties mâle 101 et femelle 102 du connecteur 100, lorsqu' aucune action extérieure n'est exercée sur les moyens 11, 12 de déplacement des parties mâle 101 et femelle 102 du connecteur 100.

Ainsi, si le moyen 13 portant les moyens d'obturation 14, 15 se situe à l'écart de la zone de déplacement des parties mâle 101 et femelle 102 du connecteur, ces deux parties 101, 102 se mettent automatiquement en position de connexion.

Et si le moyen 13 portant les moyens d'obturation 14, 15 se situe entre lesdites parties mâle 101 et femelle 102 du connecteur, alors les parties mâle 101 et femelle 102 se mettent automatiquement en position de déconnexion.

On s'assure ainsi que les parties mâle et femelle du connecteur ne soient pas mises en contact avec l'eau.

Outre le fait que ce moyen de rappel améliore la sûreté de fonctionnement du dispositif 1, il permet de limiter le nombre d'opérations pour la connexion/déconnexion nécessitant l'actionnement des moyens 11, 12 par le robot immergeable, dans la mesure où certaines opérations s'effectuent automatiquement.

Le moyen de rappel 17 peut en particulier être installé en combinaison avec le mode de réalisation décrit à l'appui de la figure 5, lequel met en oeuvre des crémaillères 110, 120 et engrenages 111, 121. Dans ce cas, le moyen de rappel 17 ne permet que la connexion et n'intervient pas pour la déconnexion. Les crémaillères et engrenages sont en revanche nécessaires pour la déconnexion et le retrait des bouchons 14, 15.

La figure 7 représente un mode de réalisation d'un moyen 13 pour déplacer les moyens d'obturation 14, 15 des parties mâle 101 et femelle 102 du connecteur 100, compris dans le dispositif conforme à l'invention.

Ce moyen 13 comprend un écarteur 131, disposé au niveau de l'une des extrémités dudit moyen 13 et pouvant être mis en même temps au contact des moyens 11, 12 de déplacement des parties mâle 101 et femelle 102 du connecteur.

Pour assurer une mise en contact au même moment de l'écarteur 131 avec les parties mâle 101 et femelle 102 du connecteur, celui-ci présente une forme symétrique par rapport à la direction de déplacement du moyen 13, laquelle se confond avec l'axe longitudinal du moyen 13.

Par exemple, l'écarteur 131 peut avoir une forme triangulaire. Dans ce cas, l'effort F₁ exercé sur le moyen 13 transmet un effort F₂, aux moyens 11, 12 de déplacement des parties mâle 101 et femelle 102 du connecteur selon la relation : *F*₂ = *F*₁/(2*cos((*a*)).

L'angle a est l'angle formé entre l'axe de symétrie du triangle passant par sa pointe destinée à être au contact des moyens 11, 12 de déplacement des parties mâle 101 et femelle 102 du connecteur et l'un quelconque des côtés de ce triangle passant par la pointe. L'angle a est représenté sur la figure 7.

Il est également prévu un moyen de rappel (non représenté), tel qu'un ressort, monté entre un bâti du dispositif 1 et le moyen 13 pour assurer un déplacement des moyens d'obturation 14, 15 des parties mâle et femelle du connecteur. Plus précisément, ce moyen de rappel est choisi de sorte qu'il retire automatiquement les moyens d'obturation 14, 15, à partir du moment où ils sont désengagés des parties mâle 101 et femelle 102 du connecteur 100.

Pour assurer le désengagement des parties mâle 101 et femelle 102, il est prévu un moyen d'actionnement (non représenté) agissant sur les parties mâle 101 et femelle 102. On réduit ainsi le nombre d'opérations nécessaires à la connexion/déconnexion des parties mâle 101 et femelle 102 du connecteur.

En variante, on pourrait envisager qu'un moyen de rappel 17, tel qu'illustré sur la figure 6, soit en outre prévu entre les moyens 11, 12 de déplacement des parties mâle 101 et femelle 102 du connecteur 100. Le désengagement des parties mâle et femelle du connecteur nécessite alors un effort un peu plus important pour aller à l'encontre de la force de rappel du moyen de rappel 17. Cependant, cela permet de connecter les parties mâle et femelle de façon automatique, après que le moyen de rappel a permis de retirer le moyen 13 portant moyens d'obturation 14, 15 hors de la zone de déplacement des parties mâle 101 et femelle 102 du connecteur.

En variante, on pourrait encore envisager qu'il n'y ait aucun moyen de rappel entre le moyen 13 et le bâti, mais qu'il existe un moyen de rappel 17, tel qu'illustré sur la figure 6, entre les moyens 11, 12 de déplacement des parties mâle 101 et femelle 102 du connecteur 100. Les moyens 11, 12 de déplacement des parties mâle 101 et femelle 102 du connecteur 100 sont alors commandés par l'intermédiaire du moyen 13 portant les moyens d'obturation 14, 15. Le moyen 13 est alors actionné par un moyen d'actionnement (non représenté) prévu dans un robot immergeable, ce robot étant distinct du dispositif de connexion/déconnexion.

Dans une autre variante, on pourrait prévoir que les moyens 11, 12 pour déplacer les parties mâle 101 et femelle 102 du connecteur 100, ainsi que le moyen 13 portant les moyens d'obturation de ces parties mâle 101 et femelle 102 du connecteur 100 sont tous actionnés indépendamment par des moyens non représentés ici. Dans cette variante, trois actionneurs sont donc prévus, un premier actionneur pouvant par exemple être formé d'une crémaillère et d'un engrenage pour déplacer la partie mâle du connecteur, un deuxième actionneur pouvant par exemple être formé d'une crémaillère et d'un engrenage pour déplacer la partie femelle du connecteur, les deux engrenages étant indépendants et un troisième actionneur pour déplacer le moyen 13 portant les moyens d'obturation 14, 15.

Enfin, la figure 9 est un schéma d'une variante de réalisation d'un dispositif de connexion/déconnexion portant sur le mode de confinement du fluide autour des parties mâle 101 et femelle 102 du connecteur. Sur cette figure, le dispositif 1 est en position de déconnexion et les moyens d'obturation 14, 15 ne sont pas représentés.

Le dispositif tel que représenté sur la figure 9 comporte deux chambres 171, 172. L'une 171 de ces deux chambres 171, 172 enveloppe la partie mâle 101 du connecteur. L'autre 172 de ces deux chambres 171, 172 enveloppe la partie femelle 102 du connecteur. Lorsque les parties mâle 101 et femelle 102 du connecteur 100 sont connectées, les deux chambres ne forment plus qu'une seule et même chambre, de manière similaire à la représentation de la figure 1.

Plus précisément, chaque chambre 171, 172 présente la forme d'une cuve, au fond de laquelle la partie mâle ou femelle du connecteur, selon la chambre considérée, est disposée. Chaque chambre 171, 172 présente une ouverture d'évacuation S, située à l'opposé du fond de la chambre 171, 172 concernée.

Les ouvertures d'évacuation respectives des deux chambres 171, 172 présentent des dimensions adaptées afin que les chambres puissent s'imbriquer l'une dans l'autre,

Les deux chambres 171, 172 sont toutes deux susceptibles d'être remplies par un fluide fourni par un système d'injection (non représenté), par l'intermédiaire d'ouvertures d'entrées du fluide dans les chambres 171, 172 représentées par la lettre « E ». Le système d'injection est conforme à celui décrit pour le mode de réalisation de la figure 2.

Là encore, ce fluide est diélectrique pour un connecteur électrique, optiquement transparent dans une gamme de longueurs d'onde prédéterminée pour un connecteur optique et à la fois diélectrique et optiquement transparent dans une gamme de longueurs d'onde prédéterminée pour un connecteur opto-électrique.

Lors des phases de connexion ou de déconnexion du connecteur 100, le fluide est injecté en surpression par rapport à la pression de l'eau environnant le connecteur, de sorte qu'il s'échappe par les ouvertures d'évacuation « S » sans que l'eau ne puisse entrer par ces ouvertures d'évacuation.

Une surpression de quelques mbar est suffisante. La surpression dépend notamment de la viscosité du fluide utilisé. Plus ce dernier est visqueux, plus la surpression peut être faible.

Un moyen 13 pour déplacer les moyens d'obturation 14, 15 est également prévu. Celui-ci est conforme à l'un quelconque des différents modes de réalisation de ce moyen 13 décrits ci-dessus. La dimension de chaque moyen d'obturation 14, 15 doit cependant être adaptée à celles des ouvertures d'évacuation « S » de la chambre 171, 172 associée.

Enfin, selon une variante de réalisation, il est envisageable de ne prévoir aucune chambre 191, 192, 171, 172 pour confiner le fluide 20 autour des parties mâle 101 et femelle 102 du connecteur.

Dans ce cas, le fluide doit être injecté autour des parties mâle 101 et femelle 102 en surpression par rapport à l'eau environnant le connecteur, pour isoler ces parties mâle 101 et femelle 102 de cette eau.

Une surpression de quelques mbar est suffisante, celle-ci étant adaptée au fluide employé.

Le dispositif de connexion/déconnexion 1 selon l'invention utilise des connecteurs simples et bon marché, n'intégrant aucun système d'actionnement complexe au sein même du connecteur. En effet, toute la partie « actionnement » du dispositif est disposée à l'extérieur du connecteur, et est récupérable et réutilisable à souhait lorsque le connecteur est sous l'eau. Ceci rend la maintenance plus facile et évidemment moins coûteuse qu'avec les connecteurs immergeables existants.

En particulier, et comme cela peut notamment être observé sur les figures 5 à 8, les moyens 11, 12 pour déplacer les parties mâle 101 et femelle 102 du connecteur 100 ne sont pas intégrés aux dites parties mâle 101 et femelle 102, mais indépendants de ceux-ci. En effet, les plaques montées sur rails, les moyens de montage 23, 24 du connecteur 100 fixés sur ces plaques, les crémaillères 110, 120 et engrenages 111, 121 sont des pièces distinctes du connecteur 100 et externes à celui-ci.

En particulier également, les moyens 13 de déplacement des moyens d'obturation 14, 15 des parties mâle 101 et femelle 102 du connecteur 100 et les moyens d'obturation 14, 15 eux-mêmes sont distincts du connecteur 100 et externes à celui-ci.

Ceci représente un avantage certain par rapport aux différents connecteurs immergeable existants, de type « rolling seal » ou pas.

En outre, l'utilisation d'engrenages ou d'un écarteur, agissant comme démultiplicateurs d'efforts, permet d'employer des robots immergeables autonomes plus petits pour gérer les phases de connexion/déconnexion du connecteur.

## Revendications

1. Dispositif (1) de connexion/déconnexion d'un connecteur (100) immergeable muni d'une partie mâle (101) et d'une partie femelle (102), le dispositif étant externe au connecteur et comprenant des moyens (11, 12), pour déplacer au moins une desdites parties mâle ou femelle du connecteur (100), entre une position, de connexion et une position de déconnexion et inversement, **caractérisé en ce qu'**il est désolidarisable du connecteur et qu'il comprend, en outre, un système (16) pour injecter un fluide (20) autour des parties mâle (101) et femelle, (102) du connecteur (100) lorsque ce dernier passe de sa position de connexion à sa position de déconnexion et inversement, de façon à les isoler de l'eau environnant le connecteur (100)..

2. Dispositif (1) de connexion/déconnexion selon la revendication 1, dans lequel il est prévu au moins une chambre (19, 171, 172) comprenant au moins une ouverture (E) pour recevoir le fluide (20) isolant lesdites parties mâle (101) et femelle (102) de l'eau environnant le connecteur (100), lorsque ce dernier passe de sa position de connexion à sa position de déconnexion et inversement et au moins une ouverture (S) pour évacuer ce fluide à l'extérieur de la chambre.

3. Dispositif de connexion/déconnexion selon la revendication précédente, comprenant une chambre (19) dans laquelle les parties mâle (101) et femelle (102) du connecteur (100) sont logées.

4. Dispositif (1) de connexion/déconnexion selon la revendication 2, comprenant deux chambres (171, 172) dont l'une (171) comprend la partie mâle (101) du connecteur et dont l'autre (172) comprend la partie femelle (102) du connecteur, les deux chambres (171, 172) formant des parties mâle et femelle complémentaires susceptibles de s'imbriquer l'une dans l'autre, chaque chambre (171, 172) comprenant au moins une ouverture (E) pour recevoir le fluide (20) lorsque le connecteur passe de sa position de connexion à sa position de déconnexion et inversement et au moins une ouverture (S) pour évacuer ce fluide, laquelle est en communication fluidique avec l'eau environnant le connecteur.

5. Dispositif (1) de connexion/déconnexion selon l'une des revendications précédentes, comprenant des moyens d'obturation (14, 15) pour rendre lesdites parties mâle et femelle du connecteur étanches à l'eau environnant le connecteur, lorsque le connecteur est en position de déconnexion.

6. Dispositif (1) de connexion/déconnexion selon l'une des revendications 5 ou 6, comprenant un moyen (13) pour déplacer lesdits moyens d'obturation (14, 15) entre la position de connexion et la position de déconnexion et inversement.

7. Dispositif de connexion/déconnexion selon la revendication précédente, dans lequel le moyen (13) pour déplacer les moyens d'obturation (14 15) comprend un écarteur (131) susceptible d'être mis en même temps au contact des moyens (11, 12) de déplacement des parties mâle (101) et femelle (102) du connecteur.

8. Dispositif (1) de connexion/déconnexion selon la revendication précédente, dans lequel l'écarteur (131) présente une forme symétrique, par exemple une forme triangulaire.

9. Dispositif (1) de connexion/déconnexion selon l'une des revendications 6 à 8, comprenant un premier moyen de rappel, monté entre un bâti du dispositif (1) et le moyen (13) de déplacement des moyens d'obturation (14, 15), pour déplacer lesdits moyens d'obturation (14, 15) lorsque le connecteur passe de sa position de déconnexion à sa position de connexion.

10. Dispositif (1) de connexion/déconnexion selon l'une des revendications précédentes, dans lequel :
- le moyen (11) pour déplacer la partie mâle (101) du connecteur comprend une première crémaillère (110) et un premier engrenage (111) susceptible d'entraîner ledit moyen (11) de déplacement de la partie mâle par l'intermédiaire de sa crémaillères (110) ; et
- le moyen (12) pour déplacer la partie femelle (102) du connecteur comprend une deuxième crémaillère (120) et un deuxième engrenage (121) susceptible d'entraîner ledit moyen (12) de déplacement de la partie femelle par l'intermédiaire de sa crémaillère (120).

11. Dispositif (1) de connexion/déconnexion selon la revendication précédente, dans lequel les deux engrenages (111, 121) coopèrent entre eux, et sont de préférence identiques.

12. Dispositif (1) de connexion/déconnexion selon l'une des revendications précédentes, comprenant un deuxième moyen de rappel (17), monté entre le moyen (11) pour déplacer la partie mâle (101) du connecteur et le moyen (12) pour déplacer la partie femelle (102) du connecteur, pour connecter lesdites parties mâle (101) et femelle (102) entre elles.

13. Utilisation d'un dispositif selon l'une des revendications précédentes, pour connecter ou déconnecter les parties mâle (101) et femelle (102) d'un connecteur (100) électrique immergeable, dans lequel le fluide (20) pour isoler lesdites parties mâle (101) et femelle (102) du connecteur de l'eau l'environnant est un fluide diélectrique.

14. Utilisation d'un dispositif selon l'une des revendications 1 à 12, pour connecter ou déconnecter les parties mâle (101) et femelle (102) d'un connecteur (100) optique immergeable, dans lequel le fluide (20) pour isoler lesdites parties mâle (101) et femelle (102) du connecteur de l'eau l'environnant est un fluide optiquement transparent dans une gamme de longueurs d'onde prédéterminée.

15. Procédé de connexion/déconnexion d'un connecteur (100) immergeable muni d'une partie mâle (101) et d'une partie femelle (102), **caractérisé en ce que**, à partir d'un dispositif de connexion/déconnexion selon l'une des revendications 1 à 12, on injecte un fluide (20) autour des parties mâle (101) et femelle (102) du connecteur (100) lorsque ce dernier passe de sa position de connexion à sa position de déconnexion et inversement, de façon à les isoler de l'eau environnant le connecteur.

16. Procédé de connexion/déconnexion selon la revendication précédente, dans lequel l'étape consistant à passer le connecteur (100) de sa position de connexion à sa position de déconnexion et inversement comporte une sous-étape consistant à déplacer des moyens d'obturation (14, 15) des parties mâle (101) et femelle (102) du connecteur (100) selon une direction perpendiculaire à la direction de déplacement desdites parties mâle et femelle.

17. Procédé de connexion/déconnexion selon l'une des revendications 15 ou 16, dans lequel on injecte le fluide (20) en surpression par rapport à l'eau environnant le connecteur.

## Patentansprüche

1. Vorrichtung (1) zum Verbinden/Lösen eines eintauchbaren Verbinders (100), welcher mit einem männlichen Teil (101) und einem weiblichen Teil (102) versehen ist, wobei die Vorrichtung extern zu dem Verbinder ist und Mittel (11, 12), zum Verlagern wenigstens eines von dem männlichen oder weiblichen Teil des Verbinders (100) zwischen einer Verbindeposition und einer Löseposition und umgekehrt, **dadurch gekennzeichnet, dass** sie von dem Verbinder lösbar ist und sie außerdem ein System (16) zum Injizieren eines Fluids (20) um dem männlichen (101) und weiblichen (102) Teil des Verbinders (100), wenn der letztere von seiner Verbindeposition in seine Löseposition und umgekehrt übergeht, auf solche Weise, dass diese von dem den Verbinder (100) umgebenden Wasser isoliert werden, umfasst.

2. Vorrichtung (1) zum Verbinden/Lösen nach Anspruch 1, wobei sie mit wenigstens einer Kammer (19, 171, 172) versehen ist, welche wenigstens eine Öffnung (E) zum Aufnehmen des Fluids (20), welches den männlichen (101) und weiblichen (102) Teil von dem den Verbinder (100) umgebenden Wasser isoliert, wenn der letztere von seiner Verbindeposition in seine Löseposition und umgekehrt übergeht, und wenigstens eine Öffnung (S) zum Abführen dieses Fluids zu der Außenseite der Kammer umfasst.

3. Vorrichtung zum Verbinden/Lösen nach dem vorhergehenden Anspruch, umfassend eine Kammer (19) in welcher der männliche (101) und weibliche (102) Teil des Verbinders (100) untergebracht sind.

4. Vorrichtung (1) zum Verbinden/Lösen nach Anspruch 2, umfassend zwei Kammern (171, 172), von welchen eine (171) den männlichen Teil (101) des Verbinders umfasst und die andere (172) den weiblichen Teil (102) des Verbinders umfasst, wobei die zwei Kammern (171, 172) komplementäre männliche und weibliche Teile bilden, welche dazu geeignet sind, sich ineinander zu verkeilen, wobei jede Kammer (171, 172) wenigstens eine Öffnung (E)zum Aufnehmen des Fluids (20), wenn der Verbinder von seiner Löseposition in seine Verbindeposition und umgekehrt übergeht, und wenigstens eine Öffnung (S) zum Abführen dieses Fluids, welche in Fluidkommunikation mit dem den Verbinder umgebenden Wasser steht, umfasst.

5. Vorrichtung (1) zum Verbinden/Lösen nach einem der vorhergehenden Ansprüche, umfassend Verschlussmittel (14, 15) zum Abdichten des männlichen und weiblichen Teils des Verbinders gegenüber dem den Verbinder umgebenden Wasser, wenn der Verbinder in der Löseposition ist.

6. Vorrichtung (1) zum Verbinden/Lösen nach einem der Ansprüche 5 oder 6, umfassend ein Mittel (13) zum Verlagern der Verschlussmittel (14, 15) zwischen der Verbindeposition und der Löseposition und umgekehrt.

7. Vorrichtung zum Verbinden/Lösen nach dem vorhergehenden Anspruch, wobei das Mittel (13) zum Verlagern der Verschlussmittel (14, 15) einen Abstandhalter (131) umfasst, welcher dazu geeignet ist, gleichzeitig in Kontakt mit den Mitteln (11, 12) zum Verlagern des männlichen (101) und weiblichen (102)teils des Verbinders gebracht zu werden.

8. Vorrichtung (1) zum Verbinden/Lösen nach dem vorhergehenden Anspruch, wobei der Abstandshalter (131) eine symetrische Form, beispielsweise eine dreieckartige Form aufweist.

9. Vorrichtung (1) zum Verbinden/Lösen nach einem der Ansprüche 6 bis 8, umfassend ein erstes Rückstellmittel, welches zwischen einem Gestell der Vorrichtung (1) und dem Mittel (13) zum Verlagern der Verschlussmittel (14, 15) angebracht ist, um die Verschlussmittel (14, 15) zu verlagern, wenn der Verbinder von seiner Löseposition in seine Verbindeposition übergeht.

10. Vorrichtung (1) zum Verbinden/Lösen nach einem der vorhergehenden Ansprüche, wobei:
- das Mittel (11), um den männlichen Teil (101) des Verbinders zu verlagern, eine erste Zahnstange (110) und eine erste Verzahnung (111) umfasst, welche dazu geeignet ist, das Mittel (11) zum Verlagern des männlichen Teils über seine Zahnstange (110) anzutreiben; und
- das Mittel (12) zum Verlagern des weiblichen Teils (102) des Verbinders eine zweite Zahnstange (120) und eine zweite Verzahnung (121) umfasst, welche dazu geeignet ist, das Mittel (12) zur Verlagerung des weiblichen Teils über seine Zahnstange (120) anzutreiben.

11. Vorrichtung (1) zum Verbinden/Lösen nach dem vorhergehenden Anspruch, wobei die zwei Verzahnungen (111, 121) miteinander zusammenwirken und bevorzugt identisch sind.

12. Vorrichtung (1) zum Verbinden/Lösen nach einem der vorhergehenden Ansprüche, umfassend ein zweites Rückstellmittel (17), welches zwischen dem Mittel (11) zum Verlagern des männlichen Teils (101) des Verbinders und dem Mittel (12) zum Verlagern des weiblichen Teils (102) des Verbinders angebracht ist, um diese männlichen (101) und weiblichen (102) Teile miteinander zu verbinden.

13. Verwendung einer Vorrichtung nach einem der vorhergehenden Ansprüche zum Verbinden oder Lösen von männlichen (101) und weiblichen (102) Teilen eines eintauchbaren elektrischen Verbinders (100), wobei das Fluid (20) zum Isolieren des männlichen (101) und weiblichen (102) Teils des Verbinders von dem umgebenden Wasser ein dielektrisches Fluid ist.

14. Verwendung einer Vorrichtung nach einem der Ansprüche 1 bis 12 zum Verbinden oder Lösen des männlichen (101) und weiblichen (102) Teils eines eintauchbaren optischen Verbinders (100), wobei das Fluid (20) zum Isolieren des männlichen (101) und weiblichen (102) Teils des Verbinders von dem ihn umgebenden Wasser ein in einem vorbestimmten Wellenlängenbereich optisch transparentes Fluid ist.

15. Verfahren zum Verbinden/Lösen eines eintauchbaren Verbinders (100), welcher mit einem männlichen Teil (101) und einem weiblichen Teil (102) versehen ist, **dadurch gekennzeichnet, dass** ausgehend von einer Vorrichtung zum Verbinden/Lösen nach einem der Ansprüche 1 bis 12 ein Fluid (20) um den männlichen (101) und weiblichen (102) Teil des Verbinders (100), wenn der letztere von seiner Verbindeposition in seine Löseposition übergeht, auf solche Weise injiziert, dass diese von dem den Verbinder umgebenden Wasser isoliert werden.

16. Verfahren zum Verbinden/Lösen nach dem vorhergehenden Anspruch, wobei der Schritt, welcher darin besteht, dass der Verbinder (100) von seiner Verbindeposition in seine Löseposition und umgekehrt übergeht, einen Unterschritt umfasst, welcher darin besteht, das die Verschlussmittel (14, 15) des männlichen (101) und weiblichen (102) Teils des Verbinders (100) entlang einer zu der Richtung der Verlagerung des männlichen und weiblichen Teils senkrechten Richtung verlagert werden.

17. Verfahren zum Verbinden/Lösen nach einem der Ansprüche 15 oder 16, wobei das Fluid (20) mit Überdruck im Verhältnis zu dem den Verbinder umgebenden Wasser injiziert wird.

## Claims

1. Device (1) for connecting/disconnecting a submersible connector (100) provided with a male part (101) and a female part (102), the device being external to the connector (100) and comprising means (11, 12) for moving at least one of said male or female parts of the connector (100) between a connection position and a disconnection position and vice versa, **characterized in that** it is releasable from the connector and it further comprises a system (16) for injecting a fluid (20) around the male part (101) and the female part (102) of the connector (100) when the latter connector goes from its connection position to its disconnection position and vice versa, in such manner as to isolate them from the water around the connector (100).

2. Connection/disconnection device (1) as claimed in claim 1, wherein there is provided at least one chamber (19, 171, 172) comprising at least one opening (E) for receiving the fluid (20) isolating said male part (101) and said female part (102) from the water around the connector (100) when the latter connector goes from its connection position to its disconnection position and vice versa and at least one opening (S) for evacuating that fluid to the exterior of the chamber.

3. Connection/disconnection device as claimed in the preceding claim, comprising a chamber (19) in which the male part (101) and the female part (102) of the connector (100) are accommodated.

4. Connection/disconnection device (1) as claimed in claim 2, comprising two chambers (171, 172) of which one chamber (171) comprises the male part (101) of the connector and the other chamber (172) comprises the female part (102) of the connector, the two chambers (171, 172) forming complementary male and female parts adapted to nest one in the other, each chamber (171, 172) comprising at least one opening (E) for receiving the fluid (20) when the connector goes from its connection position to its disconnection position and vice versa and at least one opening (S) for evacuating that fluid when it is in fluidic communication with the water around the connector.

5. Connection/disconnection device (1) as claimed in any one of the preceding claims, comprising sealing means (14, 15) for sealing said male and female parts of the connector from the water around the connector when the connector is in the disconnection position.

6. Connection/disconnection device (1) as claimed in either one of claims 5 or 6, comprising means (13) for moving said sealing means (14, 15) between the connection position and the disconnection position and vice versa.

7. Connection/disconnection device (1) as claimed in the preceding claim, wherein the means (13) for moving the sealing means (14, 15) comprise a spreader (131) adapted to be brought at the same time into contact with the means (11, 12) for moving the male part (101) and the female part (102) of the connector.

8. Connection/disconnection device (1) as claimed in the preceding claim, wherein the spreader (131) has a symmetrical shape, for example a triangular shape.

9. Connection/disconnection device (1) as claimed in any one of claims 6 to 8, comprising first return means mounted between a frame of the device (1) and the means (13) for moving the sealing means (14, 15), for moving said sealing means (14, 15) when the connector goes from its disconnection position to its connection position.

10. Connection/disconnection device (1) as claimed in any one of the preceding claims, wherein:
- the means (11) for moving the male part (101) of the connector comprise a first rack (110) and a first pinion (111) adapted to drive said means (11) for moving the male part via its rack (110); and
- the means (12) for moving the female part (102) of the connector comprise a second rack (120) and a second pinion (121) adapted to drive said means (12) for moving the female part via its rack (120).

11. Connection/disconnection device (1) as claimed in the preceding claim, wherein the two pinions (111, 121) cooperate with each other and are preferably identical.

12. Connection/disconnection device (1) as claimed in any one of the preceding claims, comprising second return means (17) mounted between the means (11) for moving the male part (101) of the connector and the means (12) for moving the female part (102) of the connector to connect said male part (101) and said female part (102) to each other.

13. Use of a device as claimed in any one of the preceding claims to connect or disconnect the male part (101) and the female part (102) of a submersible electrical connector (100), wherein the fluid (20) for isolating said male part (101) and said female part (102) of the connector from the surrounding water is a dielectric fluid.

14. Use of a device as claimed in any one of claims 1 to 13 to connect or disconnect the male part (101) and the female part (102) of a submersible optical connector (100), wherein the fluid (20) for isolating said male part (101) and said female part (102) of the connector from the surrounding water is a fluid that is optically transparent in a predetermined range of wavelengths.

15. Method of connecting/disconnecting a submersible connector (100) provided with a male part (101) and a female part (102), **characterized in that**, from a connection/disconnection device as claimed in any one of claims 1 to 12,), a fluid (20) is injected around the male part (101) and the female part (102) of the connector (100) when the latter connector goes from its connection position to its disconnection position and vice versa in such manner as to isolate them from the water around the connector.

16. Connection/disconnection method as claimed in the preceding claim, wherein the step consisting in the connector (100) going from its connection position to its disconnection position and vice versa includes a sub-step consisting in moving the sealing means (14, 15) of the male part (101) and the female part (102) of the connector (100) in a direction perpendicular to the direction of movement of said male and female parts.

17. Connection/disconnection method as claimed in either one of claims 15 or 16, wherein the fluid (20) is injected at increased pressure relative to the water around the connector.
